# FASCICULE DE BREVET EUROPEEN

(11) **EP 2 161 540 B1**
(45) Date de publication et mention de la délivrance du brevet: **28.12.2011**
(21) Numéro de dépôt: 09168482.9
(22) Date de dépôt: 24.08.2009
(51) Int. Cl.: G01C 21/00, G01C 23/00, B64D 45/04, G05D 1/06, G08G 5/00

(54) **Système de visualisation pour aéronef comprenant des moyens d'affichage de la destination finale et procédé d'affichage associé**
Anzeigesystem für Luftfahrzeug, das Mittel zur Darstellung eines Endzielortes umfasst und zugehöriges Anzeigeverfahren
Viewing system for aircraft comprising means for displaying a final destination and associated display method

(30) Priorité: 05.09.2008 FR 0804888
(43) Date de publication de la demande: 10.03.2010
(73) Titulaire: Thales, 92200 Neuilly Sur Seine (FR)
(72) Inventeur: Bacabara, Corinne, 31770 COLOMIERS (FR); Nouvel, Christian, 33700, MERIGNAC (FR); Perbet, Jean-Noël, 33320, EYSINES (FR)
(74) Mandataire: Bréda, Jean-Marc

(56) Documents cités:
- EP-A- 1 906 151
- EP-A- 1 916 503
- US-B1- 6 199 008
- US-B1- 6 216 065
- PRUYN P W; GREENBERG D P: "Exploring 3D computer graphics in cockpit avionics" IEEE COMPUTER GRAPHICS & APPLICATIONS, vol. 13, no. 3, mai 1993 (1993-05), pages 28-35, XP002527870 USA

## Description

Le domaine technique général de l'invention est celui des systèmes de vision synthétique encore appelés SVS, acronyme de Synthetic Vision Systems utilisés plus particulièrement en aéronautique pour présenter au pilote des informations concernant le pilotage ou la navigation de la façon la plus ergonomique possible. Dans le cas présent, la représentation graphique concerne l'affichage de la destination finale.

Les dispositifs d'affichage de type SVS permettent aux pilotes d'avoir une meilleure conscience des dangers environnants tels que les collisions avec le sol sans perte de contrôle, communément appelées CFIT signifiant « Controlled Flight Into Terrain ». Les CFIT sont la première cause d'accident catastrophique des avions civils. L'industrie aéronautique concentre ses efforts sur les moyens de les réduire voire de les éliminer définitivement. Généralement, les systèmes SVS permettent d'afficher un terrain synthétique ainsi que les obstacles naturels ou les constructions humaines en perspective. Ainsi, le pilote a une perception la plus réaliste possible du paysage extérieur. Classiquement, les données SVS sont affichés sur un écran communément appelé PFD signifiant « Primary Flight Display ».

Diverses solutions ont été proposées pour aider le pilote soit dans sa navigation soit dans la présentation des informations graphiques. On citera notamment le brevet EP 1 916 503 qui propose un procédé d'aide à la navigation intuitif et la publication de P.Pruyn intitulée « Exploring 3D Computer Graphics in Cockpits Avionics » parue dans IEEE Computer Graphics & Applications, vol. 13, N° 3 de mai 1993. Pour certaines applications, il est très important que le pilote puisse connaître de façon très sûre sa destination finale. Le brevet EP 1 906 151 propose un système permettant d'améliorer la représentation d'images prises par des caméras embarquées. En effet, dans certains cas, en particulier dans les opérations de secours réalisées par de petits aéronefs ou par des hélicoptères, le pilote doit trouver facilement et rapidement la zone finale d'atterrissage qui peut se trouver dans des zones d'accès difficiles comme les zones de montagne ou de forêts denses. Pour le travail aérien en forêt équatoriale, cette zone d'atterrissage pour un hélicoptère peut être seulement une aire où quelques arbres ont été préalablement coupés. A faible altitude de survol, il est donc quasi-impossible de repérer cette aire. Le système selon l'invention permet de visualiser sur le système SVS la destination finale à laquelle le pilote de l'aéronef doit se rendre de façon extrêmement intuitive et ergonomique. L'invention permet au pilote de mieux se diriger en prenant conscience de la direction qu'il doit suivre et de mieux visualiser le but à atteindre ainsi que son environnement en corrélant la visualisation provenant du SVS et l'environnement extérieur. Sa charge de travail est ainsi réduite et son stress est moindre. De plus, cette représentation fournit au pilote des données cruciales pour son atterrissage, à savoir la direction et la vitesse du vent et l'inclinaison du terrain. Cette dernière information est très importante pour le pilote d'hélicoptère qui doit toujours poser le nez de son appareil vers le haut de la pente afin de préserver la queue et le rotor anti-couple de l'appareil.

Plus précisément, l'invention a pour objet un système de visualisation de type à vision synthétique SVS, pour aéronef, ledit système comprenant au moins une base de données de navigation, une base de données cartographiques d'un terrain, des capteurs de position, des capteurs anémométriques, des capteurs de mesure de pente dudit terrain, un calculateur électronique, un moyen d'interface homme-machine et un écran d'affichage, le calculateur comprenant des moyens de traitement des différentes informations issues des bases de données, des capteurs et du moyen d'interface, lesdits moyens de traitement agencés de façon à fournir à l'écran d'affichage une image synthétique du terrain comportant une représentation de la destination finale, caractérisé en ce que ladite représentation comporte une représentation physique d'une manche à air de type aéronautique comportant trois parties, une partie basse située à l'emplacement conforme de la position de la destination finale sur le terrain, une ligne de jonction verticale et une représentation en perspective de la manche à air proprement dite disposée au-dessus de la dite ligne de jonction, la forme et l'orientation de la partie basse étant représentative de la pente locale du terrain à l'emplacement de ladite manche à air.

La partie basse peut être une ellipse dont l'inclinaison est représentative de la pente locale du terrain, ladite ellipse ayant deux faces de couleur ou de texture différente (hachures, ...), la couleur affichée étant représentative de la direction de la pente vue de l'aéronef.

Préférentiellement, la ligne de jonction a une taille suffisante de façon que le symbole normalisé domine le terrain environnant et ne soit pas masqué par le relief.

Avantageusement, la représentation en perspective de la manche à air a la forme d'un cône tronqué allongé comprenant cinq anneaux, les premier, troisième et cinquième anneaux étant d'une première couleur, les second et quatrième anneaux étant d'une seconde couleur, l'orientation du cône étant représentative de la direction du vent, le cône comprenant une cassure, l'ensemble des anneaux disposés avant la cassure représentant la vitesse du vent. Chaque anneau représente une vitesse de vent donné, par exemple, cinq noeuds.

De plus, à partir d'une certaine distance, la représentation de la manche à air a une taille d'affichage apparente représentative d'une taille constante sur le terrain.

L'invention concerne également un procédé d'affichage de la destination finale pour système de visualisation de type à vision synthétique SVS monté sur aéronef, tel que dans la revendication 6, ledit système comprenant au moins une base de données cartographiques d'un terrain, des capteurs de position, des capteurs anémométriques, des capteurs de mesure de pente dudit terrain, un calculateur électronique, un moyen d'interface homme-machine et un écran d'affichage, le calculateur comprenant des moyens de traitement des différentes informations issues des bases de données, des capteurs et du moyen d'interface, lesdits moyens de traitement agencés de façon à fournir à l'écran d'affichage une image synthétique du terrain comportant une représentation de la destination finale, le procédé comportant les étapes suivantes :
Réception des coordonnées de la destination finale et analyse de celle-ci;
Détermination de la distance de ladite destination finale ;
Si la destination finale est à une distance inférieure à une première distance, calcul des paramètres anémométriques et de la pente locale du terrain
Affichage de la destination finale sous la forme d'une manche à air représentée en perspective sur l'écran d'affichage.

L'invention sera mieux comprise et d'autres avantages apparaîtront à la lecture de la description qui va suivre donnée à titre non limitatif et grâce aux figures annexées parmi lesquelles :
La figure 1 représente le diagramme d'un système de visualisation selon l'invention ;
La figure 2 représente un affichage d'une destination finale sous la forme d'une manche à air selon l'invention ;
La figure 3 représente différents aspects de la représentation de la manche à air ;
La figure 4 représente l'organigramme du procédé d'affichage selon l'invention.

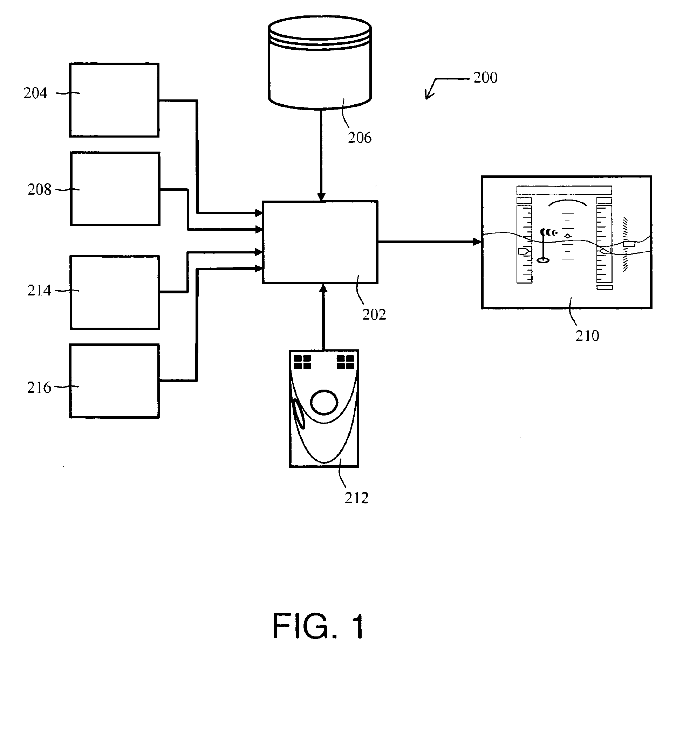

A titre d'exemple, la figure 1 représente un mode de réalisation possible d'un système selon l'invention pour des applications aéronautiques. Le système d'affichage graphique 200 est implanté dans un aéronef et comprend un calculateur ou un processeur 202 configuré pour fournir à un écran de visualisation 210 les informations à afficher.

Une ou plusieurs sources de données sont reliées au processeur 202. Ces sources de données incluent une base de données cartographiques ou d'informations concernant le terrain 206 utilisée pour le tracé de la vue en perspective. Ces bases de données sont généralement positionnées dans l'aéronef. Les données peuvent également provenir du sol par des moyens de transmission ou « data link ». De plus, ces données peuvent être stockées sur différents périphériques tels que des disquettes, des disques durs, des CD-ROM, des mémoires volatiles, des mémoires non volatiles, des RAM ou tous autres moyens permettant le stockage de données.

Le système comprend un système d'entrée dit « DIRECT TO » 204 qui peut être un système dit « GPS », acronyme de Global Positioning System, un système de gestion de vol ou FMS ou tout autre système permettant au pilote de rentrer les coordonnées de la destination finale. Le système comprend également des capteurs de positionnement 208, des capteurs anémométriques 214 donnant la direction et la vitesse du vent et des capteurs de pente du terrain 216. Enfin, le système comporte des moyens de contrôle 212 pour l'affichage. Ces moyens sont, par exemple, comme représenté sur la figure 1, un CCD (Cursor Control Device), moyen proche de la « souris » informatique. Il peut s'agir également d'un poste de commande comprenant des boutons, des potentiomètres,...

Le processeur 202 est interfacé avec des composants hardware qui fournissent un rendu graphique. Par exemple, ces composants hardware sont un ou plusieurs microprocesseurs, des mémoires, des appareils de stockage, des cartes d'interfaces ou tous autres composants standards. De plus, le processeur 202 fonctionne avec des logiciels ou « software » ou des micro-logiciels ou « firmware ». Il est capable de lire des instructions machine pour réaliser diverses tâches, calculs et fonctions de contrôle et générer les signaux à afficher et les autres données utilisés par l'écran d'affichage. Ces instructions peuvent être stockées sur des disquettes, des disques durs, des CD-ROM, des mémoires volatiles, des mémoires non volatiles, des RAM ou tous autres moyens permettant le stockage de données. Tous ces moyens sont connus de l'homme du métier.

L'écran d'affichage 210 peut être un écran à tube cathodique de type CRT, un écran à cristaux liquides de type LCD ou tout autre type d'écran. L'écran d'affichage est généralement un écran de planche de bord. Mais, l'affichage n'est pas limité à ce seul type d'écran. Ainsi, l'écran d'affichage 210 peut être la source d'images d'un viseur tête haute, connu sous l'acronyme anglo-saxon de HUD signifiant « Head-Up Display » ou faire partie d'une optique de visualisation de casque ou de jumelles à vision nocturne dite JVN. Cet écran d'affichage 210 peut être aussi la source d'images d'un système de projection sur pare-brise.

Le processeur 202 fournit les données à afficher à l'écran d'affichage 210 basées sur la position de l'avion issue des capteurs de navigation 208, des bases de données terrain 206 et du système d'entrée « DIRECT TO » 204 qui fournit la position de la destination finale. Le processeur 202 est configuré pour recevoir et calculer les données avion à savoir la position en latitude/longitude, la vitesse, le cap, ... à partir de la localisation courante de l'avion issue des capteurs de navigation 208 qui peuvent être une centrale à inertie, un GPS, ...
Basé sur les données de position, le processeur 202 obtient les données terrain à partir de la base de données terrain 206. Il les envoie à l'écran d'affichage 210 pour représenter une image synthétique.

Le processeur 202 analyse les données issues du moyen d'entrée 204 et détermine si ce point DIRECT TO est contenu dans une distance d1 sélectionnée à partir de l'aéronef. Elle peut être, par exemple, de 10 NM (Nautical Miles). Si le point n'est pas contenu dans ce rayon d'action d1, alors il n'est pas affiché à l'écran. Cette fonction a le double avantage de limiter la charge de travail du processeur et d'améliorer la lisibilité de l'image en réduisant le nombre de symboles affichés, opération connue sous le terme de « clutter », puisqu'elle n'affiche que le point DIRECT TO que lorsque celui-ci est utile au pilote de l'aéronef. La distance d1 sélectionnée peut être soit imposée par l'équipage à travers le moyen de contrôle 212 ou être une distance calculée par le processeur 202 en prenant en compte plusieurs critères tels que la vitesse de l'aéronef, la taille de l'aéronef, la taille de l'écran 210 ou tous autres critères.

Le capteur de pente du terrain 216 est un moyen permettant au processeur 202 de déterminer la pente du terrain présent à la destination finale. Ce moyen peut être tout aussi bien une base de données terrain qui contient cette information ou des informations terrain qui permettent au processeur 202 de calculer cette pente. Cette donnée peut être directement envoyée du sol et réceptionnée par le capteur 216 présent dans l'aéronef puis transmis au processeur 202.

Le capteur 214 des paramètres du vent est un moyen permettant au processeur 202 de déterminer la direction et la vitesse du vent présent à la destination finale. Ce moyen peut être un système de type GPS ou FMS qui peut effectuer ce calcul et envoyer les données au processeur 202 ou tout autre moyen qui fournit au processeur 202 les données dont il a besoin pour effectuer cette détermination. Ces données sur le vent peuvent être également directement envoyées du sol et réceptionnées par le capteur 214 présent dans l'aéronef puis transmis au processeur 202.

Le processeur 202 détermine alors la représentation graphique de la destination finale représentée par une manche à air (hauteur, positionnement, ...).

La vue perspective générale peut être égocentrique, c'est-à-dire vue de la position courante de l'aéronef ou exocentrique, c'est-à-dire vue à partir d'un point autre que la position courante de l'aéronef. L'utilisateur peut choisir entre ces deux modes de représentation à travers le moyen de contrôle 212. L'affichage ou non du point de la destination finale peut se faire à partir des moyens de contrôle 212.

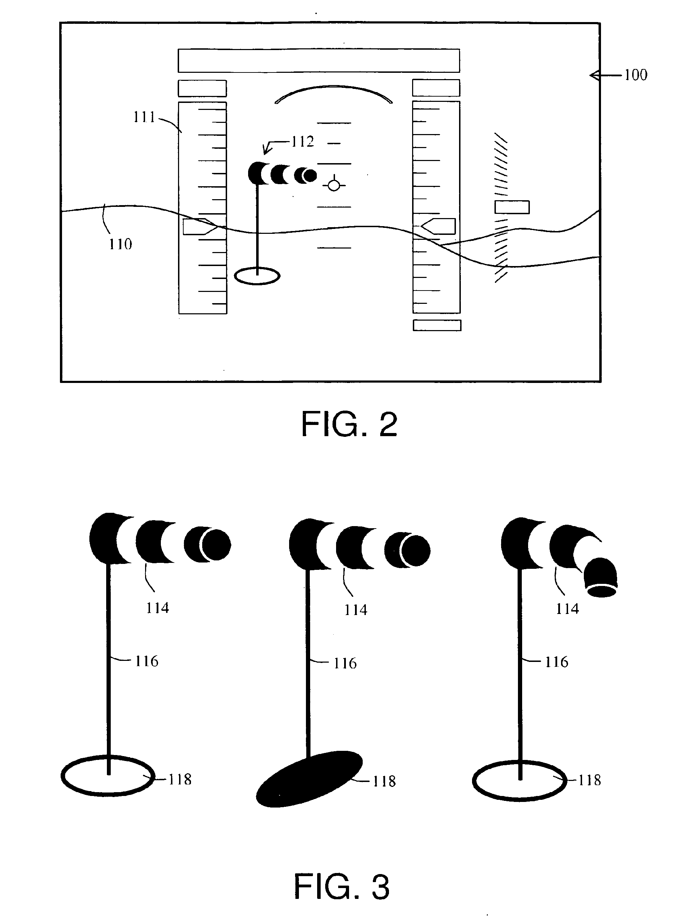

A titre d'exemple, la figure 2 représente une vue simplifiée des images 100 affichées par un dispositif selon l'invention. Sur cette figure, les lignes courbes en traits fins continus symbolisent une vue en perspective du relief du terrain 110 telle que vue par le pilote. Cette figure comporte également une symbologie 111 de type PFD, signifiant « Primary Flight Display » symbolisée essentiellement par des rectangles gradués dessinés en traits fins. Sur cette figure, la manche à air 112 est représentée en traits gras. La figure 3 représente trois variantes de représentation de la manche à air telle que représentée en figure 2 en fonction des conditions de vent et de terrain.

Un jeu sur la transparence de la manche à air peut être effectué afin de ne pas interférer avec la lecture d'autres symbologies comme celles classiques du PFD. Elle peut être fixée par exemple à 50%. La couleur de ces symboles par défaut est le blanc/rouge utilisé pour le tracé de la symbologie classique. Cette couleur peut être différente, à condition que le respect des normes aéronautiques soit assuré.

La manche à air est représentée si elle se trouve entre l'aéronef et une certaine distance d1 sélectionnée. Cette distance d1 peut être soit sélectionnée par le pilote, soit déterminée par le calculateur suivant la vitesse de l'aéronef, son altitude, .... Elle est de 10 Nautical Miles (NM) dans notre exemple. Cela permet au pilote de mieux être conscient de sa destination finale, de déterminer ainsi plus aisément la direction qu'il doit suivre pour atteindre son objectif et de repérer extérieurement son aire de poser ainsi que son environnement.

Le symbole de ce point DIRECT TO se compose de trois parties : la partie sol 118 qui indique la pente du terrain, la ligne de jonction 116 encore appelée mât et la partie haute 114 qui représente une manche à air.
La partie haute 114 du symbole représente une manche à air. Cette représentation d'une manche à air est constituée d'un manchon conique composé de cinq anneaux alternativement rouge et blanc. Cette représentation a un double objectif: suivant son orientation, elle donne la direction du vent et suivant son gonflement, elle donne la vitesse du vent. En effet, chaque bande de couleur correspond à une force de vent d'environ 5 noeuds (soit 9 km/h). Lorsque le manchon est horizontal, le vent souffle à plus de 25 noeuds (soit 45 km/h) comme représenté sur le dessin de gauche et le dessin central de la figure 3 ; sur le dessin de droite, le manchon est cassé à hauteur du troisième anneau, indiquant que le vent souffle à environ 15 noeuds (soit 27 km/h).
La partie haute 114 de ce symbole est située à une certaine hauteur h1 calculée par le processeur suivant l'altitude et la vitesse de l'aéronef, le terrain environnant, etc. Elle est reliée au terrain par une ligne de jonction 116. Cette ligne de jonction 116 peut être aussi bien continue ou en pointillés avec une épaisseur de trait plus ou moins grande. A partir d'une certaine distance, cette hauteur h1 est fixe pour permettre un meilleur discernement de l'objet et de mieux prendre conscience de la perspective et du type d'objet. On choisira cette hauteur h1 fixe minimale en fonction de la mission, du type de terrain, etc. Dans notre exemple, cette hauteur fixe minimale h1 est de 50 pieds.
La partie basse 118 du symbole est située au « sol » synthétique et est positionnée en fonction de la position réelle de la destination finale. Cette partie basse représente la direction de la pente terrain ainsi qu'une indication de la valeur de cette pente. Elle est représentée par une ellipse. Les deux faces de cette ellipse ont une couleur ou une texture différente. Dans les exemples de la figure 3, la face pile tournée vers le sol est noire, la face tournée vers le ciel est blanche. Suivant la direction de la pente par rapport à l'aéronef, la représentation est différente. Si la pente du terrain est nulle alors l'ellipse n'est plus qu'un trait. Si la pente du terrain a une inclinaison vers la droite par rapport à l'aéronef, l'ellipse est aussi inclinée vers la droite, la partie droite est plus basse que la partie gauche. Cette inclinaison est fonction du pourcentage de la pente. De même, si la pente est montante par rapport à l'aéronef, la face blanche de l'ellipse est affichée et inversement si la pente est descendante, alors seule la partie noire est visible. Cette différenciation entre les deux faces de l'ellipse peut être également réalisée par des couleurs différentes ou des motifs différents. Le pourcentage de la pente est représenté par une ellipse plus ou moins épaisse. Plus ce pourcentage est grand, c'est à dire plus la pente est importante, et plus l'épaisseur de l'ellipse est importante. Dans l'exemple du dessin central de la figure 3, la pente du terrain se trouvant sous la manche à air est descendante et dirigée vers la droite.
Le symbole de la manche à air est tracé de manière conforme au paysage, à savoir qu'il est positionné à sa position réelle. De plus, il est représenté en perspective : plus il est situé loin de l'aéronef et plus il est petit. Ce symbole ayant une hauteur h1 fixe minimale à partir d'une certaine distance, il est plus aisé pour le pilote de se représenter mentalement la distance qui le sépare de sa destination finale et d'avoir une meilleure conscience de la direction à prendre.

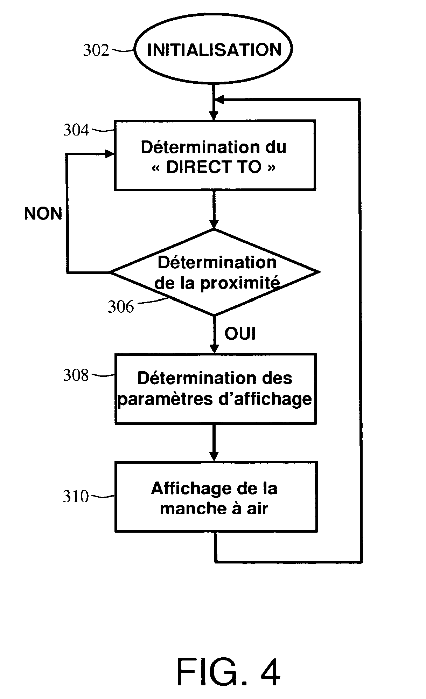

La figure 4 est un organigramme montrant une méthode pour l'affichage de ce point DIRECT TO en vue perspective en accord avec la présente invention.
Etape 302 : Initialisation
Etape 304 : le point DIRECT TO rentré est recherché. Cette recherche est accomplie, par exemple, en utilisant un ou plusieurs processeurs qui déterminent en fonction de la position courante de l'avion si le point DIRECT TO est dans un périmètre proche de l'avion.
Etape 306 : Le processeur détermine si le point DIRECT TO est localisé dans la distance d1 sélectionnée par rapport à la position de l'aéronef. S'il n'est pas situé dans cette zone alors le processus retourne à l'étape 304. Cette boucle de recherche continue jusqu'à ce que le point DIRECT TO remplisse cette condition de localisation. Cette boucle permet de ne pas surcharger l'affichage écran. Comme l'utilisateur gère un large nombre d'informations, il est bénéfique de ne pas afficher ce point DIRECT TO s'il est situé trop loin. La distance d1 sélectionnée peut être de 10 NM par exemple.
Etape 308 : le processeur détermine l'emplacement, le niveau de transparence pour afficher ce point. Il détermine aussi l'orientation ainsi que la forme de la manche à air suivant les données du vent. Il calcule aussi l'épaisseur de l'ellipse, la forme du socle du symbole, la face à afficher ou son inclinaison droite/gauche en fonction de la pente du terrain de la destination finale:
Etape 310 : le point DIRECT TO est affiché sur l'écran suivant sa position, etc. Le processus se répète à partir de l'étape 304. Le taux de répétition peut être de 30 fois par seconde.

Le domaine d'applications principales du système et du procédé selon l'invention est l'aéronautique. Dans ce domaine, l'aéronef peut être à voilure tournante ou fixe. Bien entendu, l'aéronef peur être également un drone ou un « Unmanned Air Vehicle » (UAV) commandé depuis le sol.

## Revendications

1. Système de visualisation de type à vision synthétique SVS (200), pour aéronef, ledit système comprenant au moins une base de données de navigation (204), une base de données cartographiques (206) d'un terrain, des capteurs de position (208), des capteurs anémométriques (214), des capteurs de mesure de pente dudit terrain (216), un calculateur électronique (202), un moyen d'interface homme-machine (212) et un écran d'affichage (210), le calculateur comprenant des moyens de traitement des différentes informations issues des bases de données, des capteurs et du moyen d'interface, lesdits moyens de traitement agencés de façon à fournir à l'écran d'affichage une image synthétique du terrain (110) comportant une représentation de la destination finale, **caractérisé en ce que** ladite représentation comporte une représentation physique (112) d'une manche à air de type aéronautique comportant trois parties, une partie basse (118) située à l'emplacement conforme de la position de la destination finale sur le terrain, une ligne (116) de jonction verticale appelée mât et une représentation en perspective (114) de la manche à air proprement dite disposée au-dessus de la dite ligne de jonction, la forme et l'orientation de la partie basse (118) étant représentative de la pente locale du terrain à l'emplacement de ladite manche à air.

2. Système de visualisation selon la revendication 1, **caractérisé en ce que** la partie basse est une ellipse dont l'inclinaison est représentative de la pente locale du terrain, ladite ellipse ayant deux faces de couleur ou de texture différente, la couleur affichée étant représentative de la direction de la pente vue de l'aéronef.

3. Système de visualisation selon la revendication 1, **caractérisé en ce que** la ligne de jonction (116) a une taille suffisante de façon que le symbole normalisé domine le terrain environnant et ne soit pas masqué par le relief.

4. Système de visualisation selon la revendication 1, **caractérisé en ce que** la représentation en perspective de la manche à air (114) a la forme d'un cône tronqué allongé comprenant cinq anneaux, les premier, troisième et cinquième anneaux étant d'une première couleur, les second et quatrième anneaux étant d'une seconde couleur, l'orientation du cône étant représentative de la direction du vent, le cône comprenant une cassure, l'ensemble des anneaux disposés avant la cassure représentant la vitesse du vent.

5. Système de visualisation selon la revendication 1, **caractérisé en ce que**, à partir d'une certaine distance, la représentation de la manche à air a une taille d'affichage apparente représentative d'une taille constante sur le terrain.

6. Procédé d'affichage de la destination finale pour système de visualisation de type à vision synthétique (SVS) monté sur aéronef, ledit système comprenant au moins une base de données de navigation, une base de données cartographiques d'un terrain, des capteurs de position, des capteurs anémométriques, des capteurs de mesure de pente dudit terrain, un calculateur électronique, un moyen d'interface homme-machine et un écran d'affichage, le calculateur comprenant des moyens de traitement des différentes informations issues des bases de données, des capteurs et du moyen d'interface, lesdits moyens de traitement agencés de façon à fournir à l'écran d'affichage une image synthétique du terrain comportant une représentation de la destination finale, **caractérisé en ce que** le procédé comporte les étapes suivantes :
Réception des coordonnées de la destination finale et analyse de celle-ci;
Détermination de la distance de ladite destination finale ;
Si la destination finale est à une distance inférieure à une première distance, calcul des paramètres anémométriques et de la pente locale du terrain ;
Affichage de la destination finale sous la forme d'une manche à air représentée en perspective sur l'écran d'affichage, ladite représentation de la manche à air comportant trois parties, une partie basse (118) située à l'emplacement conforme de la position de la destination finale, une ligne (116) de jonction verticale appelée mât et une représentation en perspective (114) de la manche à air proprement dite disposée au-dessus de ladite ligne de jonction, la forme et l'orientation de la partie basse (118) de la manche à air étant représentative de la pente locale du terrain à l'emplacement de ladite manche à air.

## Claims

1. A display system of the SVS synthetic vision type (200) for aircraft, said system comprising at least one navigation database (204), one cartographic database (206) of a terrain, position sensors (208), wind speed sensors (214), sensors for measuring the gradient of said terrain (216), an electronic computer (202), a man-machine interface (212) means and a display screen (210), said computer comprising means for processing the various items of information originating from the databases, the sensors and the interface means, said processing means being arranged so as to provide the display screen with a synthetic image of the terrain (110), which comprises a representation of the final destination, **characterised in that** said representation comprises a physical representation (112) of a wind sock of the aeronautic type that comprises three parts, a lower part (118) situated at the location that corresponds to the final destination on the terrain, a vertical joining line (116), referred to as a mast, and a perspective representation (114) of said wind sock strictly speaking disposed above said joining line, the shape and the orientation of the lower part (118) representing the local gradient of the terrain at the location of said wind sock.

2. The display system according to claim 1, **characterised in that** the lower part is an ellipse, the incline of which represents the local gradient of the terrain, said ellipse having two surfaces of different colour or texture, the displayed colour representing the direction of the gradient viewed from the aircraft.

3. The display system according to claim 1, **characterised in that** the joining line (116) is of sufficient size so that the standardised symbol dominates the surrounding terrain and is not masked by the relief.

4. The display system according to claim 1, **characterised in that** the perspective representation (114) of the wind sock is in the shape of an elongated, truncated cone comprising five rings, the first, third and fifth rings being of a first colour, the second and fourth rings being of a second colour, the orientation of the cone representing the wind direction, the cone comprising a fold, the set of rings disposed in front of the fold representing the wind speed.

5. The display system according to claim 1, **characterised in that**, from a certain distance, the representation of the wind sock has an apparent display size that represents a constant size over the terrain.

6. A method for displaying the final destination on an SVS synthetic vision type display system mounted on board an aircraft, said system comprising at least one navigation database, one cartographic database of a terrain, position sensors, wind speed sensors, sensors for measuring the gradient of said terrain, an electronic computer, a man-machine interface means and a display screen, said computer comprising means for processing the various items of information originating from the databases, the sensors and the interface means, said processing means being arranged so as to provide the display screen with a synthetic image of the terrain comprising a representation of the final destination, **characterised in that** the method comprises the following steps:
- receiving coordinates of the final destination and analysing said final destination;
- determining the distance of said final destination;
- calculating the wind speed parameters and the local gradient of the terrain if the final destination is at a distance that is less than a first distance;
- displaying the final destination on the display screen in the form of a wind sock represented in perspective, said representation of said wind sock comprising three parts, a lower part (118) situated at the location that corresponds to the final destination on the terrain, a vertical joining line (116), referred to as a mast, and a perspective representation (114) of said wind sock strictly speaking disposed above said joining line, the shape and the orientation of the lower part (118) of said wind sock representing the local gradient of the terrain at the location of said wind sock.

## Patentansprüche

1. Anzeigesystem des SVS-(Synthetic Vision System)-Typs (200) für Luftfahrzeuge, wobei das System Folgendes umfasst: wenigstens eine Navigationsdatenbank (204), eine kartographische Datenbank (206) eines Geländes, Positionssensoren (208), Windgeschwindigkeitssensoren (214), Sensoren zum Messen des Gradienten des Geländes (216), einen elektronischen Rechner (202), eine Mensch-Maschine-Schnittstelle (212) und einen Anzeigeschirm (210), wobei der Rechner Mittel zum Verarbeiten der verschiedenen Informationen aus den Datenbanken, von den Sensoren und von der Schnittstelle umfasst, wobei die Verarbeitungsmittel die Aufgabe haben, dem Anzeigeschirm ein synthetisches Bild des Geländes (110) zuzuführen, das eine Darstellung des Endziels beinhaltet, **dadurch gekennzeichnet, dass** die Darstellung eine physikalische Darstellung (112) eines Windsacks des aeronautischen Typs umfasst, der drei Teile umfasst, einen unteren Teil (118), der sich an der Stelle befindet, die der Position des Endziels auf dem Gelände entspricht, eine senkrechte Verbindungslinie (116), Mast genannt, und eine Perspektivdarstellung (114) des eigentlichen Windsacks, der über der Verbindungslinie angeordnet ist, wobei die Form und die Orientierung des unteren Teils (118) für den örtlichen Gradienten des Geländes am Ort des Windsacks repräsentativ sind.

2. Anzeigesystem nach Anspruch 1, **dadurch gekennzeichnet, dass** der untere Teil eine Ellipse ist, deren Neigung den örtlichen Gradienten des Geländes repräsentiert, wobei die Ellipse zwei Flächen von unterschiedlicher Farbe oder Textur hat, wobei die angezeigte Farbe die Richtung des Gradienten vom Flugzeug aus betrachtet repräsentiert.

3. Anzeigesystem nach Anspruch 1, **dadurch gekennzeichnet, dass** die Verbindungslinie (116) eine ausreichende Größe hat, so dass das standardisierte Symbol das umgebende Gelände dominiert und nicht von dem Relief verdeckt wird.

4. Anzeigesystem nach Anspruch 1, **dadurch gekennzeichnet, dass** die Perspektivdarstellung (114) des Windsacks die Form eines länglichen Kegelstumpfs mit fünf Ringen hat, wobei der erste, dritte und fünfte Ring eine erste Farbe haben und der zweite und vierte Ring eine zweite Farbe haben, wobei die Orientierung des Kegels die Windrichtung repräsentiert, wobei der Kegel eine Falte aufweist, wobei die vor der Falte befindlichen Ringe die Windgeschwindigkeit repräsentieren.

5. Anzeigesystem nach Anspruch 1, **dadurch gekennzeichnet, dass** die Darstellung des Windsacks aus einer bestimmten Entfernung eine scheinbare Anzeigegröße hat, die eine konstante Größe über das Gelände repräsentiert.

6. Verfahren zum Anzeigen des Endziels auf einem an Bord eines Luftfahrzeugs installierten SVS-(Synthetic Vision System)-Typs, wobei das System wenigstens eine Navigationsdatenbank, eine kartografische Datenbank eines Geländes, Positionssensoren, Windgeschwindigkeitssensoren, Sensoren zum Messen des Gradienten des Geländes, einen elektronischen Rechner, eine Mensch-Maschine-Schnittstelle und einen Anzeigeschirm umfasst, wobei der Rechner Mittel zum Verarbeiten der verschiedenen Informationen von den Datenbanken, den Sensoren und von der Schnittstelle umfasst, wobei die Verarbeitungsmittel die Aufgabe haben, dem Anzeigeschirm ein synthetisches Bild des Geländes zuzuführen, das eine Darstellung des Endziels beinhaltet, **dadurch gekennzeichnet, dass** das Verfahren die folgenden Schritte beinhaltet:
- Empfangen von Koordinaten des Endziels und Analysieren desselben;
- Ermitteln der Entfernung des Endziels;
- Berechnen der Windgeschwindigkeitsparameter und des örtlichen Gradienten des Geländes, wenn sich das Endziel in einer Entfernung befindet, die geringer ist als eine erste Entfernung;
- Anzeigen des Endziels auf dem Anzeigeschirm in Form eines in Perspektive dargestellten Windsacks, wobei die Darstellung des Windsacks drei Teile umfasst, einen unteren Teil (118), der sich an der Stelle befindet, die der Position des Endziels entspricht, eine senkrechte Verbindungslinie (116), Mast genannt, und eine Perspektivdarstellung (114) des eigentlichen Windsacks, der über der Verbindungslinie angeordnet ist, wobei die Form und die Orientierung des unteren Teils (118) des Windsacks für den örtlichen Gradienten des Geländes am Ort des Windsacks repräsentativ sind.
